# DEMANDE DE BREVET EUROPEEN

(11) **EP 0 850 687 A2**
(43) Date de publication de la demande: **01.07.1998**
(21) Numéro de dépôt: 97403156.9
(22) Date de dépôt: 24.12.1997
(51) Int. Cl.: B01J 8/34, B01J 8/12, C10G 11/18

(54) **Dispositif pour le traitement de particules solides en lit fluidisé, et son utilisation**

(30) Priorité: 31.12.1996 FR 9616292
(71) Demandeur: TOTAL RAFFINAGE DISTRIBUTION S.A., 92800 Puteaux (FR)
(72) Inventeur: Patureaux, Thierry, 76290 Fontaine La Mallet (FR)
(74) Mandataire: Jolly, Jean-Pierre

(57) **Abrégé**

Dans ce dispositif, sur une maheure partie de la hauteur (H) du lit fluidisé dense s'étend une partition de cloisonnements verticaux (26) qui définissent une pluralité de cellules élémentaires, indépendantes les unes des autres.

Dans les parties supérieures et inférieures du dispositif se trouvent des moyens de distribution homogène de particules (20,20') du type du garnissage structuré ainsi qu'un conduit (18) d'alimentation de particules et une ligne d'alimentation (8) de fluide gazeux de traitement.

Le dispositif permet d'améliorer l'écoulement du gaz et d'homogénéiser le temps de séjours des particules.

## Description

La présente invention concerne les opérations de traitement des particules de catalyseur en craquage catalytique à l'état fluide, et plus particulièrement les opérations de strippage et de régénération du catalyseur. Elle a plus précisément pour objet un dispositif et un procédé pour traiter, par un fluide circulant à contre-courant, les particules de catalyseur en lit fluidisé dense, afin notamment d'éliminer les polluants entraînés avec ces particules et/ou adsorbés sur celles-ci.

De manière connue en soi, l'industrie pétrolière a recours à des procédés de conversion tels que le procédé de craquage catalytique en lit fluidisé (en anglais, Fluid Catalytic Cracking, ou encore procédé FCC). Dans ces procédés, des molécules d'hydrocarbures à haut poids moléculaire et à point d'ébullition élevé sont scindées en molécules plus petites, qui peuvent bouillir dans des intervalles de températures plus faibles, convenant à l'usage recherché (voir à cet effet, notamment, la demande de brevet français n° 2.628.436 au nom de la Demanderesse).

Les particules de catalyseur se désactivent rapidement pendant le court laps de temps où elles sont en contact avec la charge, essentiellement du fait d'une adsorption d'hydrocarbures, ainsi que d'un dépôt de coke et d'autres contaminants sur leurs sites actifs. Il est donc nécessaire de stripper en continu les grains désactivés de catalyseur, pour en récupérer les hydrocarbures adsorbés et entraînés dans les volumes vides séparant ces grains, puis de régénérer ces grains de catalyseur, également en continu, par une combustion contrôlée du coke, dans une section de régénération à un ou plusieurs étages. Les grains de catalyseur sont ensuite recyclés vers la zone réactionnelle. Ces deux opérations de traitement, que sont le strippage et la régénération, s'effectuent en lit fluidisé dense, c'est à dire de densité comprise entre 400 et 800 kg/m³.

Toutefois, l'utilisation de ces lits fluidisés industriels de grande taille présente un certain nombre de difficultés.

Ainsi, il est nécessaire d'y opérer un brassage conséquent, afin de casser les accumulations de solide ou de fluide, et d'en assurer ainsi un mélange intime. En revanche, ce brassage a pour effet d'augmenter de manière indésirable le temps de séjour des particules dans la zone de traitement. Or, ce temps de séjour est particulièrement critique et doit être sensiblement le même pour les différentes particules.

Selon une technique usuelle, le strippage s'effectue dans une enceinte située à la sortie de la colonne de réaction, que celle-ci soit ascendante ou descendante, après séparation des effluents issus de la zone réactionnelle.

Au niveau inférieur de ladite enceinte, le strippage s'opère en phase fluidisée dense. Un fluide gazeux, de préférence très polaire (vapeur d'eau par exemple), est injecté à la base de l'enceinte et lave à contre-courant la suspension de grains désactivés de catalyseur. Il permet le déplacement et la récupération des hydrocarbures, qui sont soit entraînés dans les espaces vides laissés entre les grains de catalyseurs désactivés, soit adsorbés à leur surface. Finalement, les grains de catalyseur strippés sont évacués par une sortie se situant à la base de l'enceinte.

Le temps de séjour des particules de catalyseur dans le strippeur doit être le plus homogène possible. En effet, si le catalyseur séjourne pendant une durée insuffisante dans le strippeur, un excès d'hydrocarbures reste déposé à sa surface et est ensuite envoyé au régénérateur. Ceci conduit à une température de régénération trop élevée, nuisible au bon fonctionnement de l'unité, au détriment de la quantité d'hydrocarbures valorisables récupérés dans la zone de fractionnement.

En revanche, si la durée de séjour du catalyseur est trop importante, cela oblige, afin de garder un débit de catalyseur constant, à surdimensionner l'enceinte de strippage, ce qui entraîne un encombrement et un surcoût indésirables.

En ce qui concerne la régénération, celle-ci a lieu dans une enceinte reliée au bas du strippeur par un tube incliné. La régénération se déroule usuellement à contre-courant, au sein d'un lit fluidisé dense, au sommet duquel est introduit le catalyseur coké à régénérer et à la base duquel un gaz de combustion riche en oxygène, par exemple de l'air, est admis par une soufflante.

Ici encore, le temps de séjour des particules de catalyseur dans l'enceinte de régénération doit être le plus homogène possible.

En effet, si le catalyseur séjourne un temps insuffisant dans le régénérateur, la combustion du coke déposé à sa surface est incomplète, ce qui présente deux inconvénients :
- d'une part, le catalyseur n'est que partiellement régénéré, de sorte que ses propriétés sont limitées par l'obstruction d'un nombre important de ses sites actifs;
- d'autre part, le catalyseur aura emmagasiné une quantité de chaleur insuffisante, ce qui a pour conséquence une mauvaise vaporisation de la charge dans la colonne de réaction, et donc un craquage incomplet.

En revanche, si le catalyseur est soumis trop longtemps aux conditions de régénération, et en particulier à la température élevée qui les caractérise, il court de forts risques d'être endommagé.

Les problèmes liés à la circulation à contre-courant d'un fluide ascendant et d'un flux de particules descendantes sont bien connus en soi. Ils ont d'ores et déjà été résolus dans certains domaines techniques, différents de celui du craquage catalytique.

Ainsi, le brevet U.S. 2 781 301 propose, dans une enceinte de purification d'huiles circulant à contre-courant de particules d'adsorbant, d'introduire une pluralité de cloisonnements internes verticaux. Le but recherché est la diminution des phénomènes de rétromélange (tendance des particules à se laisser entrainer vers le haut par le fluide ascendant), ainsi qu'un meilleur contrôle de la vitesse de passage.

Néanmoins, les problèmes rencontrés dans le domaine du traitement des huiles sont entièrement différents de ceux du craquage catalytique. En effet, les lits fluidisés denses gaz / particules sont beaucoup plus turbulents que les mélanges huile / particules, ne serait-ce que de par la grande viscosité des huiles. Les problèmes de rétromélange, de courant de recirculation, sont nettement plus importants dans ces lits fluidisés et ils s'y produisent de manière plus soudaine et plus désordonnée.

Le fait que le traitement s'effectue en lit fluidisé est ainsi la cause d'importants problèmes supplémentaires. On citera également des problèmes de ségrégation liés notamment à la formation de bulles de vapeur montante de plus en plus grosses. Par ailleurs, l'utilisation d'internes dans les unités de craquage catalytique est particulièrement difficile, en raison des phénomènes d'abrasion liés à la vitesse très élévée de circulation des particules de catalyseur (plusieurs tonnes par minute).

Tout ceci fait que le strippage et la régénération des grains de catalyseur de craquage catalytique au moyen d'un gaz circulant à contre-courant demeurent particulièrement problématiques, bien que diverses solutions aient déjà été proposées.

On citera notamment l'interposition, dans la phase fluidisée dense de catalyseur, d'obstacles qui se présentent par exemple sous la forme de chicanes en V renversé. Ces obstacles ont pour but de briser les grosses bulles de vapeur, évitant ainsi le renardage, et de casser les courants de recirculation, ce qui limite le rétromélange.

Toutefois, cette solution ne résoud que partiellement le problème de l'homogénéisation du temps de séjour, et présente un inconvénient supplémentaire: ces obstacles, qui incluent le plus souvent des parois inclinées, créent une ségrégation entre la vapeur et le solide. En effet, le catalyseur a tendance à s'accumuler au voisinage des parois inclinées, tandis que la vapeur remontant s'accumule dans les V renversés, créant ainsi une zone morte. De plus, de tels internes sont généralement sujets à l'érosion par le flux de particules.

Le brevet U.S. 2 481 439 propose une enceinte de strippage comportant une pluralité de garnissages transversaux espacés les uns des autres, chacun de ces garnissages étant constitué de grilles empilées les unes au dessus des autres et soudées de manière à former des cellules verticales.

Néanmoins, les espaces présents entre ces garnissages s'avèrent être des zones de turbulences privilégiées, où se produisent, de manière désordonnée, des tourbillons et du rétromélange. Les particules de catalyseur ne progressent donc pas de manière continue et uniforme, ce qui entraîne un défaut d'homogénéité du temps de séjour des particules dans l'enceinte de strippage.

Afin de pallier les différents inconvénients de la technique antérieure évoqués ci-dessus, la présente invention a pour but de proposer un dispositif et un procédé pour le traitement de particules solides fluidisées, qui permettent une homogénéisation du temps de séjour de ces particules dans la zone de traitement, tout en réalisant une mise en contact intime entre le solide et le fluide de traitement.

A cet effet, la présente invention a pour objet un dispositif pour le strippage ou la régénération de particules de catalyseur, dans une unité de craquage catalytique à l'état fluide, par traitement desdites particules en lit fluidisé dense circulant de haut en bas au sein d'une enceinte de traitement et à contre-courant d'un fluide gazeux de traitement, ledit dispositif comprenant:
- au moins un conduit pour l'introduction des particules à traiter à la partie supérieure du lit fluidisé dense;
- au moins un conduit raccordé à la base de l'enceinte, pour l'évacuation des particules traitées à la base du lit fluidisé dense;
- au moins une ligne d'alimentation en fluide gazeux de traitement, débouchant à la base de l'enceinte ;
ce dispositif étant caractérisé en ce que, sur une majeure partie de la hauteur du lit fluidisé dense, s'étend une partition de cloisonnements verticaux continus, qui définissent une pluralité de cellules de traitement élémentaires, indépendantes les unes des autres.

Ce dispositif permet de réaliser les objectifs précités.

Il permet tout d'abord d'homogénéiser le temps de séjour des particules de catalyseur dans l'enceinte de traitement.

En effet, les cellules de traitement indépendantes créées par l'interposition de cloisonnements verticaux continus s'étendent sur une majeure partie de la longueur du lit fluidisé dense de particules à traiter. Ces cellules possèdent, par conséquent, un rapport hauteur / diamètre élevé, qui est bien supérieur à celui des enceintes classiques. De la sorte, les courants de recirculation et le rétromélange, qui sont d'autant plus importants que ce rapport est faible, sont très nettement atténués: au sein de chaque cellule, il règne un écoulement de type piston, qui permet à l'ensemble des particules solides de progresser de manière uniforme.

De plus, la ségrégation entre la vapeur montante et le solide descendant est évitée, dans la mesure où, contrairement aux techniques de l'art antérieur, les cellules de traitement élémentaires de l'invention sont assimilables à autant d'enceintes vides. L'invention évite donc l'utilisation d'obstacles inclinés, sur les parois desquels le catalyseur est susceptible de s'accumuler.

Enfin, les parois desdites cellules étant verticales, le dispositif conforme à la présente invention n'est pas sujet à l'érosion par le flux de particules de catalyseur, contrairement à de nombreux dispositifs de l'art antérieur.

L'invention a également pour objet un procédé pour le strippage ou la régénération de particules de catalyseur en lit fluididé dense, dans une enceinte de traitement d'une unité de craquage cataytique à l'état fluide, ce procédé comprenant au moins les étapes suivantes:
- une étape d'introduction des particules à traiter dans l'enceinte de traitement, à la partie supérieure du lit fluidisé dense;
- une étape de traitement desdites particules circulant de haut en bas dans l'enceinte de traitement, sous forme de lit fluidisé dense et à contre-courant d'un fluide gazeux de traitement introduit à la base dudit lit fluidisé dense;
- une étape d'évacuation des particules traitées hors de l'enceinte de traitement, à la base du lit fluidisé dense;

ce procédé étant caractérisé en ce que, lors de l'étape de traitement, les particules de catalyseur et ledit fluide gazeux passent au travers d'une pluralité de cellules élémentaires de traitement, indépendantes les unes des autres, définies à l'intérieur de ladite enceinte par une partition de cloisonnements verticaux continus, qui divisent le lit fluidisé dense en une pluralité de lits fluidisés denses contigus, s'écoulant de haut en bas de manière indépendante les uns par rapport aux autres.

Au sens de la présente invention, on entend, par lit fluidisé dense, un lit fluidisé dont la densité est comprise entre 400 et 800 kg/m³.

Les cloisonnements verticaux conformes à l'invention peuvent s'étendre sur une hauteur comprise entre 50 et 90%, et de préférence entre 60 et 80% de la hauteur du lit fluidisé dense.

De manière avantageuse, le nombre de cellules de traitement élémentaires définies par les cloisonnements verticaux conformes à l'invention est tel que le rapport entre leur hauteur et leur diamètre hydraulique est compris entre 3 et 10 et, de préférence, entre 5 et 7.

Compte tenu des dimensions usuelles des enceintes de traitement, ce nombre de cellules de traitement élémentaires est compris entre 2 et 50, de manière préférée entre 3 et 40 et, de manière encore plus préférée, entre 5 et 20.

En effet, si le nombre de cellules est trop petit, leur rapport hauteur / diamètre reste faible, ce qui empêche une bonne homogénéisation du temps de séjour des particules de catalyseur.

En revanche, si les cellules élémentaires sont trop nombreuses, et donc de faible diamètre, leur section transversale est susceptible d'être entièrement occupée par une bulle de vapeur montante, ce qui empêcherait alors un contact correct entre le solide et la vapeur.

De manière avantageuse, en particulier lorsque le conduit d'introduction des particules à traiter présente un diamètre beaucoup plus faible que celui de l'enceinte, au moins un moyen de distribution homogène des particules est disposé au-dessus de la partition de cloisonnements verticaux.

De tels moyens de distribution peuvent être placés soit au niveau de la sortie du conduit d'introduction des particules de catayseur, soit dans le lit fluidisé dense lui-même, et ils peuvent être utilisés alternativement ou complémentairement.

De manière analogue, au moins un moyen de distribution homogène de fluide de traitement peut être disposé au-dessous de la partition de cloisonnements verticaux. Ce ou ces moyens de distribution peuvent être placés soit au niveau de la sortie de la ligne d'alimentation en fluide, soit dans le lit fluidisé dense, et ils peuvent être utilisés alternativement ou complémentairement.

Grâce à de tels moyens de distribution, les particules et le fluide de strippage se répartissent de manière uniforme sur toute la section de l'enceinte de strippage. Chaque cellule élémentaire se trouve ainsi bien alimentée à la fois en particules et en fluide. Le strippage au sein de chacune des cellules est alors particulièrement satisfaisant, du fait de l'écoulement de type piston qui y règne.

Selon un mode de réalisation, ces moyens de distribution homogène sont susceptibles sont aptes à orienter à leur sortie les particules de catalyseur ou le fluide selon deux directions différentes. Environ 50% des particules sont déviées dans une première direction et les 50% restants sont déviées selon une seconde direction formant un angle de 10 à 90 degrés avec la première direction. Il en est de même pour le fluide au-dessus de sa ligne d'alimentation.

Les moyens de distribution peuvent être constitués par l'assemblage de tôles plissées coupées transversalement par rapport à leurs plans. Ces tôles plissées peuvent être perforées, striées ou rugueuses, et sont assemblées de façon telle que l'arête de plissure de chaque tôle forme un angle de sensiblement 45 à 135 degrés avec l'arête de plissure de la tôle adjacente. Selon un mode particulièrement préféré de l'invention, cet angle est de 90 degrés, définissant ainsi des réseaux de canaux croisés à angle droit. Ces croisements permettent avantageusement un contact étroit entre le fluide et les particules à l'intérieur du garnissage.

La disposition des tôles favorise la distribution homogène des particules ou du fluide. En particulier, dans la forme de réalisation décrite ci-dessus, 50% des particules de catalyseur (ou du fluide) sont déviées à chaque intersection formée par les arêtes de plissures d'une première tôle avec les arêtes de plissures d'une seconde tôle adjacente.

Diverses structures d'élément de garnissage employées dans d'autres domaines peuvent être utilisées. Notamment, les mélangeurs statiques tels que ceux commercialisés par les Sociétés dénommées Sulzer-SMV ou Kenics, bien que non destinés à une telle application, peuvent être adaptés et modifiés pour permettre une distribution homogène des particules ou du fluide.

D'autres caractéristiques et avantages de l'invention apparaîtront à la lecture de la description qui va suivre d'une mise en oeuvre de l'invention. Dans cette description, on se réfèrera aux dessins annexés, dans lesquels:
La figure 1 représente une unité de craquage catalytique à l'état fluide, au sein de laquelle sont intégrés des dispositifs conformes à l'invention;
La figure 2 illustre l'application de l'invention à une enceinte de strippage des particules de catalyseur usé de cette unité;
La figure 3 est une vue en perspective d'un mixeur statique, utilisé comme moyen de distribution homogène des particules de catalyseur et du fluide de traitement;
La figure 4 est une vue en coupe, selon la ligne IV-IV de la figure 2, d'une partition de cloisonnements verticaux continus conforme à l'invention;
La figure 5 illustre l'application de l'invention à une enceinte de régénération des particules de catalyseur usé de la figure 1.

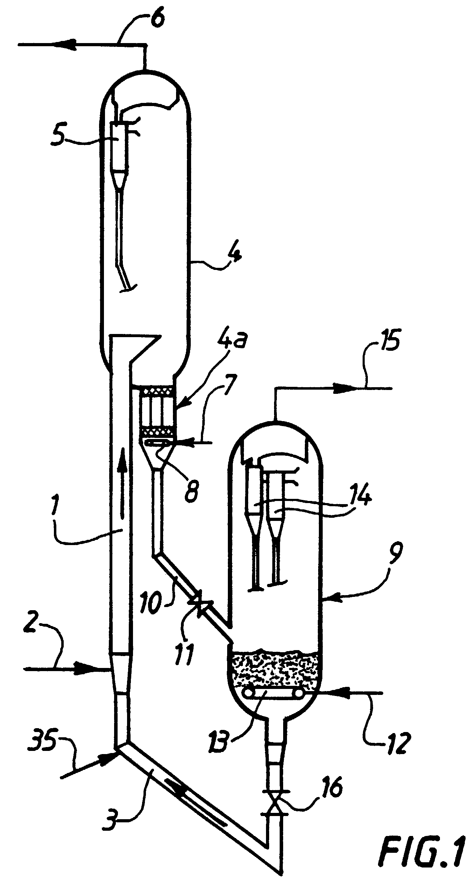

Le dispositif de craquage catalytique par le procédé FCC représenté schématiquement sur la figure 1 est d'un type connu en soi. Il comprend essentiellement une colonne 1, dite élévateur de charge, alimentée à sa base, par la ligne 2, en charge à traiter et, par le conduit 3, en particules d'un catalyseur de craquage. Un gaz élévateur, par exemple de la vapeur d'eau, est introduit dans la colonne 1 par la ligne 35.

La colonne 1 débouche à son sommet dans une capacité 4, où s'effectue la séparation de la charge craquée et à la base de laquelle les particules désactivées de catalyseur sont strippées dans une enceinte de strippage 4a.

Dans le cas présent, l'enceinte de strippage 4a est excentrée par rapport à la colonne. Toutefois, elle peut revêtir d'autres formes et positions. Par exemple, cette enceinte peut être concentrique à la colonne, ce qui nécessite un dessin adapté des éléments.

La charge traitée est séparée dans un cyclone 5, qui est logé dans la capacité 4, au sommet de laquelle est prévue une ligne d'évacuation 6 de la charge craquée, tandis que les particules désactivées se déplacent par gravité vers l'enceinte de strippage 4a. Une ligne 7 alimente en fluide de strippage, généralement de la vapeur d'eau, des injecteurs ou diffuseurs de gaz de fluidisation 8 disposés régulièrement à la base de l'enceinte de strippage 4a. Le strippage s'effectue donc en lit fluidisé dense, à contre-courant des particules.

Les particules désactivées de catalyseur ainsi strippées sont évacuées à la base de l'enceinte de strippage 4a vers un régénérateur 9, par l'intermédiaire d'un conduit 10, sur lequel est prévue une vanne de régulation 11. Dans le régénérateur 9, le coke déposé sur les particules du catalyseur est brûlé à l'aide d'air, injecté à la base du régénérateur par une ligne 12, qui alimente des injecteurs 13 régulièrement espacés. Les particules du catalyseur traité, entraînées par le gaz de combustion, sont séparées par des cyclones 14, d'où le gaz de combustion est évacué par une ligne 15, tandis que les particules de catalyseur sont rejetées vers la base du régénérateur 9, d'où elles sont recyclées par le conduit 3, équipé d'une vanne de régulation 16, vers l'alimentation de l'élévateur 1.

Les caractéristiques dimensionnelles et opératoires d'un tel dispositif sont habituellement les suivantes :
- hauteur de la partie réactionnelle de l'élévateur 1: 5 à 40 mètres,
- température de la charge à craquer : 75 à 150°C,
- débit d'alimentation de l'élévateur 1 en charge à traiter : 1000 à 20 000 tonnes par jour,
- débit d'alimentation de l'élévateur 1 en catalyseur : 3 à 50 tonnes par minute,
- temps de craquage dans l'élévateur 1 : 0,1 à 10 secondes,
- température de régénération du catalyseur : 650 à 900°C,
- temps de séjour du catalyseur dans le régénérateur 9 : 5 à 20 mn.

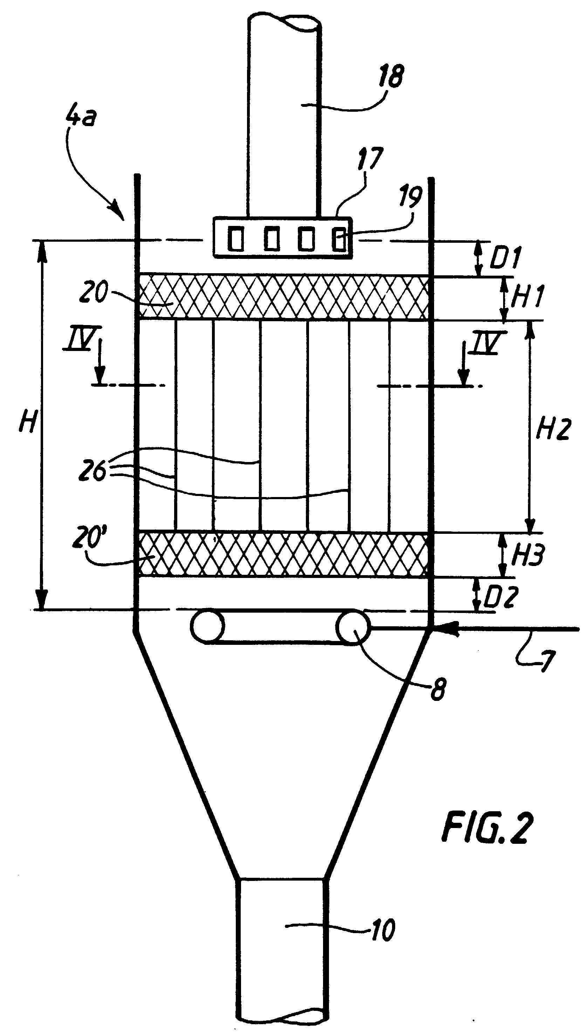

Comme le montre la figure 2, le dispositif conforme à l'invention peut être utilisé dans l'enceinte de strippage 4a de la figure 1. Cette enceinte 4a comprend à son sommet un conduit 18 permettant l'introduction des particules de catalyseur désactivées à stripper et, à sa base, une ligne 7 alimentant des diffuseurs 8 en un fluide gazeux de strippage.

Un lit fluidisé dense de catalyseur s'étend donc sur une hauteur H de l'enceinte, entre le conduit 18 d'introduction des particules et la ligne 7 d'alimentation en fluide.

Un premier moyen de distribution homogène du catalyseur descendant est prévu au niveau de la sortie du conduit 18. Ce moyen est constitué par un distributeur annulaire 17, qui distribue les particules par des ouvertures latérales 19.

Au-dessous du conduit, et à une distance D₁ de celui-ci, un second moyen 20 de distribution homogène des particules est disposé au sein même du lit fluidisé dense et s'étend sur une hauteur H₁ de l'enceinte de strippage. La distance D₁ est par exemple égale à 0,1H, où H est la hauteur totale du lit fluidisé dense, mais peut être comprise entre 0,05H et 0,2H. La hauteur H₁ est par exemple égale à 0,1H, mais peut être comprise entre 0,05H et 0,2H.

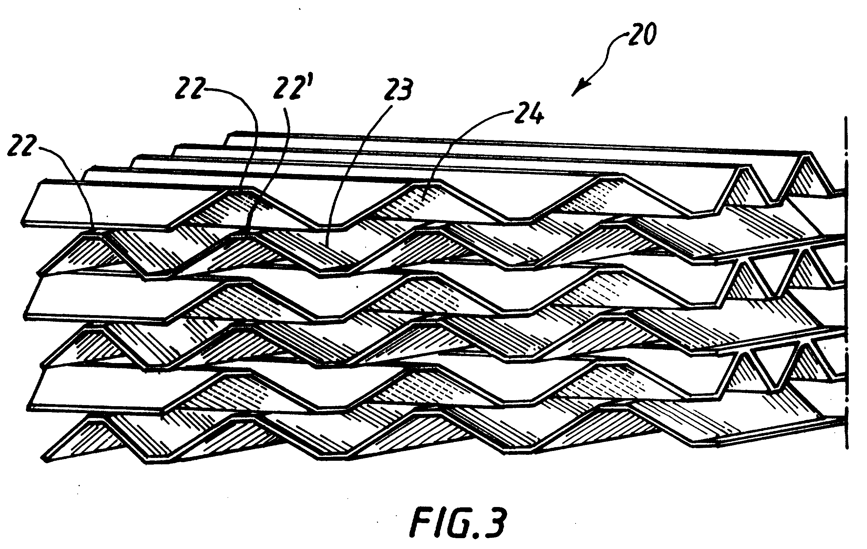

Comme le montre la figure 3, le moyen 20 de distribution homogène placé dans le lit fluidisé dense est constitué de tôles plissées coupées transversalement par rapport à leur plan. Ces tôles plissées sont assemblées de façon telle que l'arête de la plissure 22 de chaque tôle forme un angle de sensiblement 90 degrés avec l'arête de la plissure 22' de la tôle adjacente. Ainsi, les plissures de chaque tôle s'entrecroisent avec les plissures de la tôle adjacente et constituent des cellules formant un réseau de canaux croisés 23, 24. La section des cellules est choisie afin d'éviter tout phénomène d'obstruction par les particules.

Dans le cas présenté, les tôles ondulées sont soudées les unes aux autres au niveau de l'arête des plissures 22, 22'. Les particules de catalyseur pénètrent et sont guidées dans les canaux 23, 24. L'agencement des canaux permet de dévier les particules à chaque intersection formée par les plissures d'une première tôle avec les plissures d'une seconde tôle adjacente, entraînant ainsi une distribution homogène des particules de catalyseur.

En faisant à nouveau référence à la figure 2, une partition de cloisonnements verticaux continus 26 est disposée au-dessous des moyens 20 de distribution et s'étend sur une hauteur H₂ du lit fluidisé dense. La hauteur H₂ est par exemple égale à 2H/3, mais elle peut être comprise entre H/2 et 9H/10. Sur la figure 2, les cloisonnements sont représentés immédiatement au-dessous du moyen 20 de distribution, mais ils peuvent en être espacés d'une distance allant par exemple jusqu'à 0,1H.

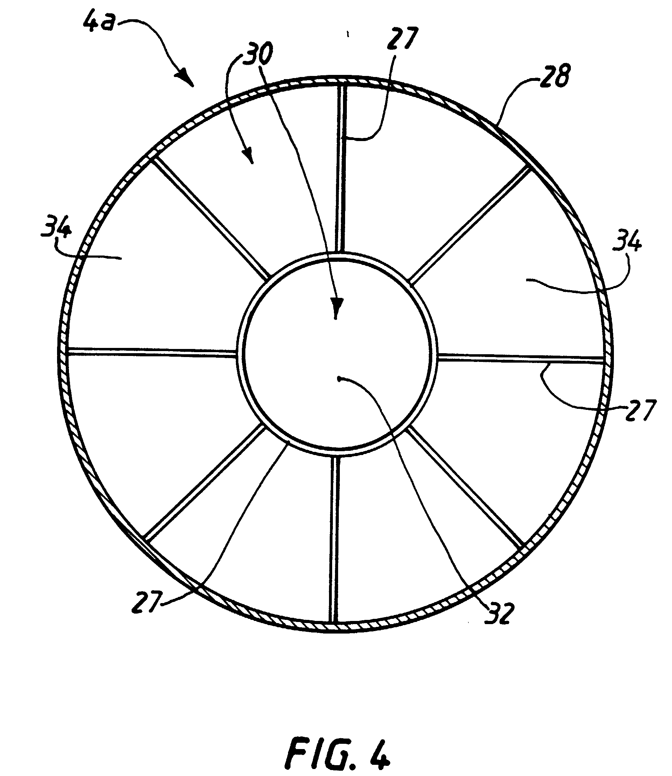

Comme le montre la figure 4, la partition de cloisonnements verticaux est constituée d'un ensemble de tôles 27 soudées soit entre elles, soit avec la paroi 28 circulaire de l'enceinte de strippage 4a. Cet ensemble définit, en vue de dessus, une pluralité de cellules de strippage 30 élémentaires, à savoir tout d'abord une zone centrale 32 sensiblement concentrique à la paroi 28 de l'enceinte de strippage, à la périphérie de laquelle s'étendent des secteurs angulaires tronqués 34. La zone centrale 32, et les secteurs angulaires tronqués 34 possèdent des sections sensiblement égales.

Dans une variante de réalisation non représentée, les tôles soudées aux parois de l'enceinte de strippage sont disposées suivant des diamètres de celle-ci, de sorte que les cellules élémentaires de strippage sont des parties angulaires de l'enceinte de strippage.

En faisant à nouveau référence à la figure 2, un moyen 20' de distribution homogène du fluide de strippage est intercalé entre l'extrémité inférieure des cloisonnements verticaux 26 et les diffuseurs 8 dudit fluide. Il est semblable au moyen 20 de distribution homogène des particules à stripper, représenté à la figure 3, et il ne sera donc pas à nouveau décrit.

Ce moyen de distribution du fluide de strippage est disposé à une distance D₂ de la ligne d'alimentation de fluide, et il s'étend en outre sur une hauteur H₃ de l'enceinte de strippage.

La distance D₂ est par exemple égale à 0,1H, mais elle peut être comprise entre 0,05H et 0,2H. La hauteur H₃ est par exemple égale à H/10, mais elle peut être comprise entre 0,05H et 0,2H.

Sur la figure 2, le moyen 20' de distribution est représenté immédiatement au-dessous des cloisonnements verticaux, mais il peut en être espacé d'une distance allant par exemple jusqu'à 0,1H.

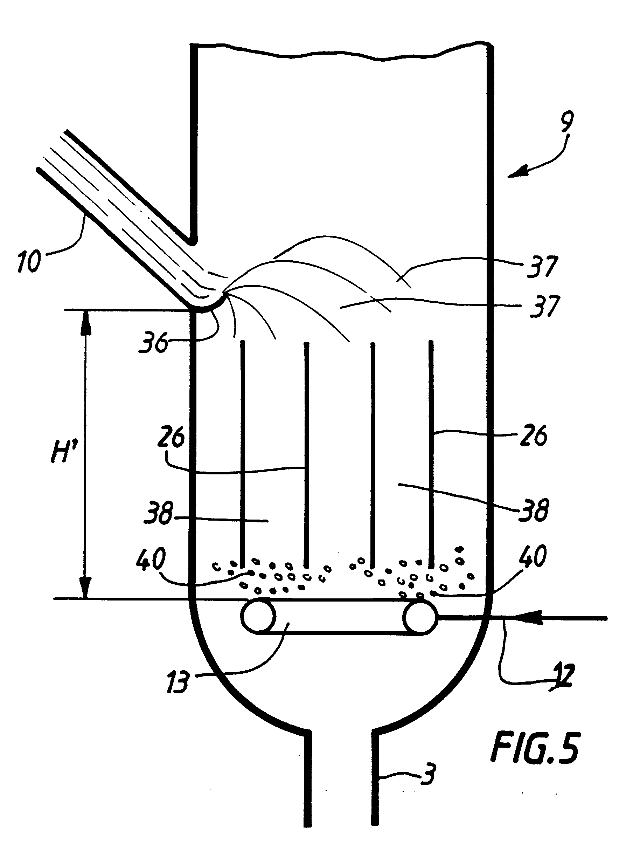

La figure 5 illustre l'application de l'invention à l'enceinte de régénération 9 de la figure 1. Les particules désactivées de catalyseur provenant de l'enceinte de strippage 4a sont dirigées vers l'enceinte de régénération 9 par l'intermédiaire d'un conduit 10. Il est prévu, à la sortie de ce conduit, un moyen de distribution homogène des particules, qui est constitué par un prolongement 36 de la partie aval du conduit, incurvé vers le haut. Ce prolongement permet aux trajectoires 37 suivies par le catalyseur de se répartir suivant toute la section de l'enceinte 9.

Le catalyseur est maintenu dans des conditions de lit fluidisé dense, entre le conduit 10 et le dispositif d'alimentation 13 en fluide de régénération. Une partition de cloisonnements verticaux continus 26, analogue à celle décrite en référence aux figures 2 et 4, s'étend sur une fraction substantielle de la hauteur H' de ce lit fluidisé dense, par exemple égale à 2H'/3 mais pouvant être comprise entre H'/2 et 9H'/10. Cette partition définit une pluralité de cellules 38 de régénération indépendantes qui, du fait de leur rapport hauteur / diamètre élevé, assurent une bonne homogénéité du temps de séjour des particules de catalyseur.

Afin d'assurer une meilleure répartition du fluide de régénération 40 dans chacune des cellules, des moyens de distribution homogène du fluide sont prévus à la sortie de la ligne d'alimentation. A cet effet, des injecteurs 13, régulièrement répartis à l'extrémité de la ligne 12 d'alimentation en fluide, sont prolongés par des diffuseurs non représentés, qui permettent au fluide de se disperser sur suivant toute la section transversale de l'enceinte.

Après son passage au sein des cellules, le catalyseur régénéré est évacué à la base de l'enceinte 9 et se trouve dirigé par la ligne 3 vers la base de la colonne de réaction.

L'invention n'est pas limitée aux formes de mise en oeuvre décrites ci-dessus. L'homme de l'art pourra ainsi adapter l'objet de l'invention à tout autre type de strippeur, comme les strippeurs annulaires, ou à tout autre type de régénérateur. L'invention vise en outre toute partition de cloisonnements verticaux continus, d'une géométrie quelconque.

### EXEMPLES

Les exemples ci-après visent à illustrer l'invention et à souligner certains avantages apportés par le présent dispositif, dans le cas d'une enceinte de strippage.

Des tests représentatifs ont été réalisés afin d'évaluer l'efficacité d'un strippeur conforme à l'invention, comparativement avec un strippeur de l'art antérieur pourvu de chicanes.

Les tests s'effectuent dans une unité commerciale à une pression d'environ 2.10⁵ Pa (2 bars). La charge traitée est un mélange de distillat sous vide et de résidu atmosphérique.

Dans le test No 1, l'enceinte de strippage comprend des chicanes de structure classique, alors que dans les tests No 2 et 3, l'enceinte de strippage comprend des cloisonnements verticaux continus tels que représentés à la figure 4 décrite ci-dessus.

| | Test N°1 | Test N°2 | Test N°3 |
|---|---|---|---|
| Vapeur de strippage (t/h) | 3 | 3 | 1,5 |
| Température du régénérateur (°C ) | 740 | 690 | 704 |
| Rapport C/O | 5,0 | 6,4 | 5,7 |
| ΔCoke (% en poids) | 0,9 | 0,7 | 0,1 |
| Hydrogène du coke (% en poids) | 7,5 | 6,0 | 6,6 |
| Postcombustion (°C ) | 27 | 5 | 11 |
| Addition de particules de catalyseur frais (t/j) | 5 | 3,1 | 4 |

La comparaison entre les tests 1 et 2 montre une importante baisse de la température de régénération et de la température de postcombustion dans l'unité où l'invention a été mise en oeuvre. L'hydrogène du coke est réduit, ce qui confirme le bon contact et l'effet de lavage dans la zone de strippage et donc une très bonne récupération des hydrocarbures sur et entre les particules de catalyseur.

On observe également une réduction du ΔCoke (à savoir la différence entre les quantités du coke présent sur le catalyseur à l'entrée de la zone de régénération et à la sortie de cette zone), ce qui montre une bonne homogénéité du temps de séjour du catalyseur dans le stripppeur et donc une faible formation de coke.

L'efficacité du strippage permet d'augmenter le rapport C/O (rapport massique du catalyseur C en contact avec la charge O) au sein du dispositif et donc d'accroître la conversion de la charge, en mettant celle-ci en présence d'un plus grand nombre de sites actifs des particules de catalyseur.

De plus, la stabilité des particules de catalyseur du dispositif est augmentée, ce qui permet de réduire l'ajout quotidien de particules de catalyseur frais et le soutirage quotidien de particules désactivées de catalyseur, tout en conservant le volume adéquat de particules dans le dispositif.

Le test N°3 a été conduit avec une vapeur de strippage réduite de l'ordre de 1,5 t/h. Les résultats sont également satisfaisants vis-à-vis de ceux du test N°1. Ainsi, le strippage selon l'invention autorise une diminution de la consommation de vapeur de strippage, tout en améliorant son efficacité par rapport à l'art antérieur. En outre, cela se traduit par une économie d'énergie et une réduction du volume d'eau polluée résultant de la condensation de la vapeur utilisée pour le strippage.

Les résultats ci-dessus traduisent les gains apportés par le dispositif de strippage selon l'invention. L'homogénéisation du temps de séjour des particules de catalyseur dans le strippeur et l'amélioration du contact entre le fluide de strippage et les particules se traduisent notamment par une réduction de l'entraînement des hydrocarbures vers le régénérateur, une baisse de la teneur en hydrogène du coke et l'élimination du phénomène de postcombustion.

## Revendications

1. Dispositif pour le strippage ou la régénération de particules de catalyseur, dans une unité de craquage catalytique à l'état fluide, par traitement desdites particules en lit fluidisé dense circulant de haut en bas au sein d'une enceinte de traitement (4a; 9) et à contre-courant d'un fluide gazeux de traitement, ledit dispositif comprenant:
- au moins un conduit (18; 10) pour l'introduction des particules à traiter à la partie supérieure du lit fluidisé dense;
- au moins un conduit (10; 3) raccordé à la base de l'enceinte, pour l'évacuation des particules traitées à la base du lit fluidisé dense;
- au moins une ligne (8; 2) d'alimentation en fluide gazeux de traitement, débouchant à la base de l'enceinte ;
ce dispositif étant caractérisé en ce que, sur une partie majeure de la hauteur du lit fluidisé dense, s'étend une partition de cloisonnements verticaux continus (26), qui définissent une pluralité de cellules de traitement (30; 38) élémentaires, indépendantes les unes des autres.

2. Dispositif selon la revendication 1, caractérisé en ce que lesdits cloisonnements verticaux (26) s'étendent sur une hauteur (H₂) comprise entre 50 et 90% et, de préférence, 60 à 80% de la hauteur (H) du lit fluidisé dense.

3. Dispositif selon l'une des revendications 1 et 2, caractérisé en ce que les cellules de traitement (30; 38) élémentaires ont un rapport entre leur hauteur et leur diamètre hydraulique compris entre 3 et 10 et, de préférence, entre 5 et 7.

4. Dispositif selon l'une des revendications 1 à 3, caractérisé en ce que le nombre de cellules de traitement (30; 38) élémentaires est compris entre 2 et 50, de manière préférée entre 3 et 40, et de manière encore plus préférée entre 5 et 20.

5. Dispositif selon l'une des revendications 1 à 4, caractérisé en ce que, en coupe transversale, les cellules (30; 38) ont des sections sensiblement égales.

6. Dispositif selon l'une des revendications 1 à 5, caractérisé en ce que les cloisonnements verticaux définissant les cellules de traitement élémentaires sont constitués par un ensemble de tôles (27) soudées ou fixées soit entre elles, soit avec la paroi (28) de l'enceinte de traitement (4a;9).

7. Dispositif selon l'une des revendications 1 à 6, dans lequel l'enceinte de traitement (4a) est circulaire, caractérisé en ce que les cellules (30) se composent d'une zone centrale (32) sensiblement concentrique à la paroi (28) de l'enceinte (4a;9), à la périphérie de laquelle s'étendent des secteurs angulaires tronqués (34).

8. Dispositif selon l'une des revendications 1 à 6, dans lequel l'enceinte de traitement (4a; 9) est circulaire, caractérisé en ce que les cellules de traitement (30) se composent de secteurs angulaires de ladite enceinte.

9. Dispositif selon l'une des revendications 1 à 8, caractérisé en ce qu'au moins un moyen (17; 20; 36) de distribution homogène des particules à traiter est disposé au-dessus des cloisonnements verticaux (26).

10. Dispositif selon la revendication 9, caractérisé en ce qu'un moyen (17; 36) de distribution homogène des particules est disposé au niveau de la sortie du conduit (18;10) d'introduction desdites particules.

11. Dispositif selon la revendication 9 ou 10, caractérisé en ce qu'au moins un moyen (20) de distribution homogène des particules est disposé dans le lit fluidisé dense.

12. Dispositif selon l'une des revendications 1 à 11, caractérisé en ce qu'au moins un moyen (20';8;13) de distribution homogène du fluide de traitement est disposé au-dessous des cloisonnements verticaux (26).

13. Dispositif selon la revendication 12, caractérisé en ce qu'un moyen (8;13) de distribution homogène du fluide de traitement est disposé au niveau de la sortie de la ligne (7; 12) d'alimentation dudit fluide.

14. Dispositif selon la revendication 12 ou 13, caractérisé en ce qu'au moins un moyen (20') de distribution homogène du fluide est disposé dans le lit fluidisé dense.

15. Dispositif selon la revendication 11 ou la revendication 13, caractérisé en ce que les moyens de distribution des particules ou du fluide, qui sont disposés dans le lit fluidisé dense (20, 20'), sont des mélangeurs statiques.

16. Procédé pour le strippage ou la régénération de particules de catalyseur en lit fluididé dense dans une enceinte de traitement d'une unité de craquage catalytique à l'état fluide, ce procédé comprenant au moins les étapes suivantes:
- une étape d'introduction des particules à traiter dans l'enceinte de traitement (4a; 9), à la partie supérieure du lit fluidisé dense;
- une étape de traitement desdites particules circulant de haut en bas dans l'enceinte de traitement, sous forme de lit fluidisé dense et à contre-courant d'un fluide gazeux de traitement introduit à la base dudit lit fluidisé dense;
- une étape d'évacuation des particules traitées hors de l'enceinte de traitement, à la base du lit fluidisé dense,
ce procédé étant caractérisé en ce que, lors de l'étape de traitement, les particules de catalyseur et ledit fluide gazeux passent au travers d'une pluralité de cellules élémentaires de traitement, indépendantes les unes des autres, définies à l'intérieur de ladite enceinte (4a; 9) par une partition de cloisonnements verticaux continus (26), divisant le lit fluidisé dense en une pluralité de lits fluidisés denses contigus, s'écoulant de haut en bas, de manière indépendante les uns par rapport aux autres.

17. Procédé selon la revendication 16, caractérisé en ce que la densité desdits lits fluidisés denses contigus est comprise entre 400 et 800 kg/m³.
